# EUROPEAN PATENT SPECIFICATION

(11) **EP 2 843 503 B1**
(45) Date of publication and mention of the grant of the patent: **22.05.2019**
(21) Application number: 14177175.8
(22) Date of filing: 15.07.2014
(51) Int. Cl.: G06F 1/32, G06F 1/26

(54) **Information processing apparatus and power supply monitoring circuit**
Informationsverarbeitungsvorrichtung und Leistungsüberwachungsschaltung
Appareil de traitement d'informations et circuit de surveillance d'alimentation électrique

(30) Priority: 28.08.2013 JP 2013177045
(43) Date of publication of application: 04.03.2015
(73) Proprietor: Fujitsu Client Computing Limited, Kawasaki-shi, Kanagawa 211-8588 (JP)
(72) Inventor: Nakazawa, Shigeaki, Kawasaki-shi Kanagawa 211-8588 (JP)
(74) Representative: Haseltine Lake LLP

(56) References cited:
- US-A1- 2004 001 346
- US-A1- 2009 177 907
- US-A1- 2011 029 793
- US-A1- 2011 047 396
- US-A1- 2012 139 345

## Description

### FIELD

The embodiments discussed herein are related to an information processing apparatus and a power supply monitoring circuit.

### BACKGROUND

Some mobile information processing apparatuses (hereinafter, simply referred to as "mobile devices"), such as notebook personal computers (PC) or mobile phones, include multiple electrical power supply sources, such as alternating current (AC) adapters or batteries. Furthermore, the mobile devices that include multiple electrical power supply sources each include a power supply monitoring circuit that identifies an electrical power supply source that supplies electrical power to a central processing unit (CPU) or other information processing units.

The power supply monitoring circuit that identifies an electrical power supply source monitors a state of the electrical power supply source. Then, the power supply monitoring circuit controls the operation of the CPU or a miscellaneous system in accordance with the state of the electrical power supply source. Furthermore, the power supply monitoring circuit switches multiple electrical power supply sources in accordance with the state of the electrical power supply sources.

Furthermore, in recent years, in order to reduce electrical power consumption and to speed up a response at the time of operation performed by an operator, information processing units, such as CPUs or the like, include various modes, such as an electrical power saving mode or a turbo mode.

The electrical power saving mode mentioned here is a mode in which, by reducing the throughput of an information processing unit, electrical power consumption is reduced as much as possible by decreasing a clock or a power supply voltage. With the electrical power saving mode, low electrical power consumption can be implemented.

Furthermore, the turbo mode mentioned here is a mode in which, even though electrical power consumption is increased, a process performed by an information processing unit can be implemented at high speed by increasing a clock or a power supply voltage. In the turbo mode, by promptly making a response to the operation performed by an operator or by promptly making an intermittent response to a device, such as a hard disk drive (HDD), it is possible to reduce stress placed on the operator. In other words, by using the turbo mode, it is possible to improve a response speed.

A mobile device switches modes in accordance with an amount of the task to be processed or with a temperature inside the device. For example, when no task or some task is present, a mobile device is running in the electrical power saving mode. When an amount of task is sharply increased by an operation performed by an operator, the mobile device shifts to the turbo mode. If the temperature inside the device rises to a certain level or more due to the operation performed in the turbo mode, the mobile device shifts to the electrical power saving mode in order to prevent the device from being destructed due to heating by the device. Furthermore, if an amount of task is decreased during the operation in the turbo mode, the mobile device also shifts to the electrical power saving mode.

Furthermore, in recent years, due to pursuing a response speed and an increase in the operating time of a battery, electrical power consumed in the turbo mode is increased by a factor of two or more when compared with a case in which the electrical power saving mode is used.

Accordingly, in accordance with an increase in the electrical power consumed in the turbo mode, it is preferable to increase the rated current of an external power supply, such as an AC adapter, that supplies electrical power to a mobile device. The "rated" mentioned here is a value that is determined, by a manufacturer, as an upper limit of the current that can be output by the external power supply under a specific condition. However, in practice, because the rated current is set by taking into consideration a margin of the operation, the external power supply can output a current that exceeds the rated current. Furthermore, the upper limit of the current that can be output may sometimes vary due to the effect of the environment, such as individual difference between various parts included in an information processing apparatus, an input voltage, a temperature at the vicinity of the device, and the like.

As a method that controls electrical power that is input from an external power supply, there is a conventional technology that determines, when a current supplied from an AC adapter is equal to or greater than a threshold, that this state is an excess current; that reduces a clock of a CPU; and that reduces a current to be consumed. Furthermore, there is a conventional technology that reduces an output voltage when a temperature rise is detected in an AC adapter; that reduces a clock of a CPU in response to a change in a voltage: and that reduces a current to be consumed.
Patent Document 1: Japanese Laid-open Patent Publication No. 2004-133646
Patent Document 2: Japanese Laid-open Patent Publication No. 2009-225610

US 2011/047396 A1 discloses an information processing apparatus including (a) a storage section storing AC adapter capacity identification, (b) a first section for outputting the AC adapter capacity information, (c) a setting section for setting threshold values used to control power consumption of the apparatus, (d) a detection section for detecting the power consumption of the apparatus, and (e) a control section for controlling power consumption based on whether the power consumption exceeds one of the thresholds.

US 2011/029793 A1 discloses generating a signal from a plurality of power supplies to reduce power consumption. The signal is asserted when at least one of the power supplies of the plurality of power supplies signals impairment, and at least one of the power supplies of the plurality of power supplies signals that the power supply is supplying current above a threshold level.

However, because the electrical power consumption is increased when the turbo mode is used, the current from an electrical power supply source, such as an external power supply or a battery, is increased. Consequently, a voltage drop is increased in a path from the electrical power supply source to the CPU or to a miscellaneous system. Furthermore, if the electrical power consumption is increased, the impedance of the main body of the device that includes the CPU or the miscellaneous system is decreased. When the impedance is decreased, a protection circuit in an external power supply operates and thus the voltage that is output from the external power supply drops.

As described above, if the output voltage from the external power supply drops and falls below a threshold that is used to identify the external power supply, the power supply monitoring circuit erroneously detects that an AC adapter is disconnected and thus the electrical power supply from the external power supply may possibly be interrupted. The interruption of the power supply due to the erroneous detection affects the operation mode of the mobile device. Furthermore, if an output voltage from the external power supply falls below the threshold, the power supply monitoring circuit determines that the external power supply is newly connected; therefore, identification of the external power supply may possibly be changed. Because a special task is needed for identifying the external power supply, the throughput of the mobile device may possibly be reduced due to a repeatedly performed identification process. Furthermore, due to the repeatedly performed identification process, an operator may possibly and erroneously determine that a failure has occurred in the mobile device.

Accordingly, it is desirable to provide an information processing apparatus and a power supply monitoring circuit that sufficiently use the capacity of an electrical power supply of the external power supply while maintaining the reliability.

The present invention is defined by the appended claims. Particular embodiments are set out in the respective dependent claims. Embodiments which do not fall within the scope of the claims do not describe part of the present invention.

### SUMMARY

According to an aspect of an embodiment, an information processing apparatus includes: an external power supply; a secondary battery; a power supply monitoring circuit; and an information processing unit, wherein the information processing unit is operated by electrical power supplied from the external power supply or the secondary battery, and the power supply monitoring circuit includes a first determining unit that determines whether a voltage supplied from the external power supply is equal to or greater than a voltage threshold, which is lower than a lower limit of the external power supply by a predetermined value, by comparing a divided voltage, acquired by a division of the voltage supplied from the external power supply, with a reference voltage, a second determining unit that determines whether a current supplied from the external power supply is equal to or greater than a current threshold, and an electrical power saving control circuit that drops, when the first determining unit determines that the supplied voltage is lower than the voltage threshold and the second determining unit determines that the supplied current is equal to or greater than the current threshold, electrical power consumed by the information processing unit, and releases a drop in the electrical power consumed by the information processing unit when the first determining unit determines that the supplied voltage is equal to or greater than the voltage threshold after a certain time, for which electrical power consumed by the information processing unit is made to drop has elapsed.

### BRIEF DESCRIPTION OF DRAWINGS

FIG. 1 is a block diagram illustrating an information processing apparatus;
FIG. 2 is a circuit diagram illustrating a voltage determining comparator;
FIG. 3 is a schematic diagram illustrating an output from the voltage determining comparator;
FIG. 4 is a circuit diagram illustrating a current determining comparator;
FIG. 5 is a schematic diagram illustrating an output from the current determining comparator;
FIG. 6 is a block diagram illustrating an electrical power saving control circuit;
FIG. 7 is a schematic diagram illustrating an output from a NOR circuit;
FIG. 8 is a circuit diagram illustrating a power supply switching comparator according to a first embodiment;
FIG. 9 is a schematic diagram illustrating an output from the power supply switching comparator according to the first embodiment;
FIG. 10 is a flowchart illustrating the flow of electrical power saving control performed by an AC adapter identifying circuit according to the first embodiment;
FIG. 11 is a sequence diagram illustrating the circuit operation performed when an unauthorized AC adapter having a low output voltage is connected in the first embodiment;
FIG. 12 is a sequence diagram illustrating the circuit operation performed when an AC adapter is connected in a state in which a battery is running in the first embodiment;
FIG. 13 is a sequence diagram illustrating the circuit operation performed when, in the first embodiment, the capacity of the AC adapter exceeds after a mode is shifted to the turbo mode while the AC adapter is being connected;
FIG. 14 is a sequence diagram illustrating the circuit operation performed when the AC adapter is disconnected in the first embodiment;
FIG. 15 is a circuit diagram illustrating a power supply switching comparator according to a second embodiment;
FIG. 16 is a schematic diagram illustrating an output from a power supply switching comparator according to the second embodiment;
FIG. 17 is a sequence diagram illustrating the circuit operation performed when, in the second embodiment, the capacity of the AC adapter exceeds after a mode is shifted to the turbo mode while the AC adapter is being connected;
FIG. 18 is a sequence diagram illustrating the circuit operation performed when the AC adapter is disconnected in the second embodiment; and
FIG. 19 is a block diagram illustrating an example of the hardware configuration of a notebook PC.

### DESCRIPTION OF EMBODIMENTS

Preferred embodiments of the present invention will be explained, by way of example only, with reference to accompanying drawings. The information processing apparatus and the power supply monitoring circuit disclosed in the present invention are not limited to the embodiments described below. In particular, a description will be given of an example of a notebook PC that includes an AC adapter and will be given of an example of an AC adapter identifying circuit mounted on the notebook PC; however, any mobile device may also be used as long as the mobile device can receive a supply of electrical power from an external power supply.

### [a] First Embodiment

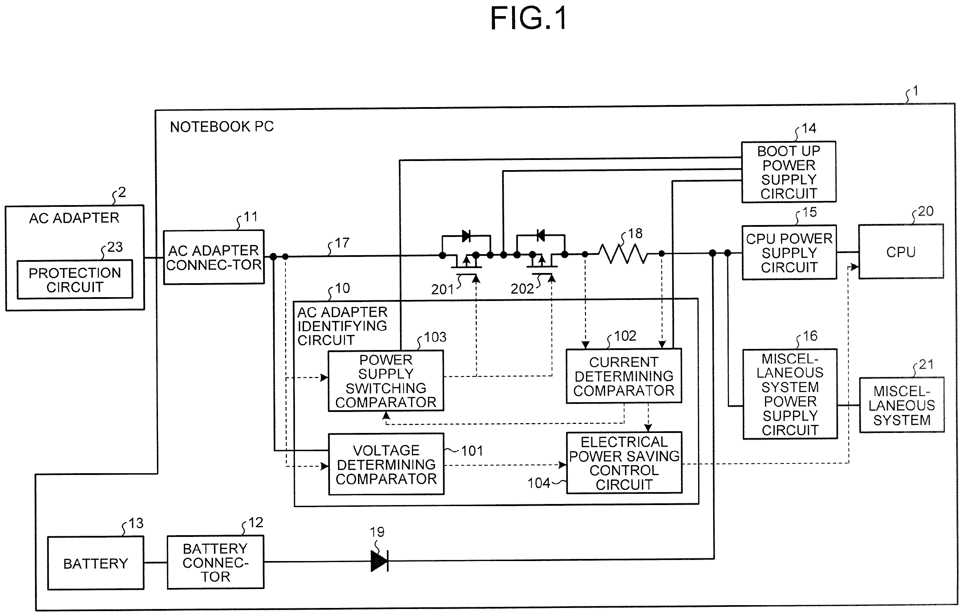

FIG. 1 is a block diagram illustrating an information processing apparatus. As illustrated in FIG. 1, the information processing apparatus according to the first embodiment includes a notebook PC 1 and an AC adapter 2. The solid lines that connect each unit illustrated in FIG. 1 represent electrical power supply lines that are used to send electrical power. Furthermore, the broken lines that connect each unit represent signal lines that are used to send signals.

The AC adapter 2 is an external power supply that supplies electrical power to the notebook PC 1. A protection circuit 23 is mounted on the AC adapter 2. The AC adapter 2 mentioned here corresponds to an example of an "external power supply".

The protection circuit 23 is a circuit that drops, if an amount of electrical power that exceeds the capacity of the AC adapter 2 is supplied from the AC adapter 2, a voltage output from the AC adapter 2 in order to avoid damage or degradation of internal parts in the AC adapter 2.

Specifically, when the impedance of a CPU 20 and a miscellaneous system 21 falls below a threshold, the protection circuit 23 decreases an output voltage from the AC adapter 2. Then, if the impedance of the CPU 20 and the miscellaneous system 21 is recovered to a level equal to or greater than the threshold, the protection circuit 23 releases a drop in the output voltage of the AC adapter 2.

The notebook PC 1 includes an AC adapter identifying circuit 10, an AC adapter connector 11, a battery connector 12, a battery 13, a boot up power supply circuit 14, a CPU power supply circuit 15, a miscellaneous system power supply circuit 16, the CPU 20, and the miscellaneous system 21. Furthermore, the notebook PC 1 includes field effect transistor (FET) switches 201 and 202, an AC adapter current sensing resistor 18, and a battery rectifier diode 19 on the electrical power supply line that connects the AC adapter connector 11 and the CPU 20 and the miscellaneous system 21. Hereinafter, the transmission path for the electrical power from the AC adapter connector 11 is referred to as an AC adapter line 17.

Furthermore, the notebook PC 1 receives a supply of electrical power from the AC adapter 2, in addition to the battery 13.

The CPU 20 is an arithmetic processing unit that performs an arithmetic processing. The CPU 20 operates in response to receiving electrical power supplied from the AC adapter 2 or the battery 13 via the CPU power supply circuit 15. The CPU 20 and the miscellaneous system 21 mentioned here correspond to an example of an "information processing unit".

Furthermore, the CPU 20 has a function of controlling the electrical power saving mode. During the time for which the CPU 20 receives an input of a High voltage signal from an electrical power saving control circuit 104, which will be described later, to a control terminal in the electrical power saving mode, the CPU 20 shifts each of the units, such as the CPU 20, the miscellaneous system 21, or the like, to the electrical power saving mode.

The miscellaneous system 21 is a system that is used in various processes performed in, for example, a memory, a hard disk, or the like in the notebook PC 1. The miscellaneous system 21 operates in response to receiving a supply of electrical power from the AC adapter 2 or the battery 13 via the miscellaneous system power supply circuit 16. The CPU 20 and the miscellaneous system 21 mentioned here correspond to an example of an "information processing unit". Furthermore, in a description below, for convenience of description, there may be a case in which, a description will sometimes be given, for an electrical power supplied to the CPU 20 and the miscellaneous system 21, by omitting the CPU power supply circuit 15 and the miscellaneous system power supply circuit 16.

The AC adapter connector 11 is a connecting terminal of the AC adapter 2 in the notebook PC 1. The AC adapter 2 is connected to the AC adapter connector 11. The AC adapter connector 11 receives an electrical power supply from the AC adapter 2. Then, the AC adapter connector 11 outputs the electrical power supplied from the AC adapter 2 to the AC adapter line 17. In the following, the voltage of the electrical power that has been output from the AC adapter 2 is referred to as an "AC adapter voltage". Furthermore, the current of the electrical power that has been output from the AC adapter 2 is referred to as an "AC adapter current".

Furthermore, the electrical power output from the AC adapter connector 11 is input to a voltage determining comparator 101. Furthermore, the AC adapter voltage output from the AC adapter connector 11 is input, as a signal, to the voltage determining comparator 101 and a power supply switching comparator 103.

The battery 13 is a built-in power supply installed inside the notebook PC 1. The battery 13 supplies the electrical power stored in the battery 13 to each of the units in the notebook PC 1. The battery 13 and the AC adapter 2 can simultaneously be connected to the notebook PC 1. The output voltage of the battery 13 is set lower than that of the AC adapter voltage. Consequently, if electrical power is supplied from the AC adapter 2, the electrical power consumed by the battery 13 can be reduced. The battery 13 corresponds to an example of a "secondary battery".

In a description below, the CPU power supply circuit 15 and the miscellaneous system power supply circuit 16 are referred to as an "onboard power supply" and the AC adapter 2 and the battery 13 are referred to as an "electrical power source", which are distinguished.

The battery connector 12 is a connecting terminal of the battery 13. The electrical power supply line extending from the battery connector 12 is connected to the electrical power supply line that extends from the FET switch 202 towards the CPU power supply circuit 15 and the miscellaneous system power supply circuit 16. The battery connector 12 receives an electrical power supply from the battery 13. Then, the battery connector 12 outputs the electrical power supplied from the battery 13 toward the connection point on the electrical power supply line extending from the FET switch 202 to the CPU 20 and the miscellaneous system 21. Furthermore, on the electrical power supply line extending from the battery connector 12, the battery rectifier diode 19 is arranged.

The boot up power supply circuit 14 receives an electrical power supply from the AC adapter 2 when the FET switches 201 and 202, which will be described later, are turned on. Furthermore, the boot up power supply circuit 14 receives an electrical power supply from the AC adapter 2 or the battery 13 when the FET switches 201 and 202 are turned off. Specifically, the boot up power supply circuit 14 always receives a supply of electrical power.

The boot up power supply circuit 14 supplies electrical power to a current determining comparator 102 and the power supply switching comparator 103, which will be described later. Here, in the first embodiment, a description has been given of only the electrical power supplied from the boot up power supply circuit 14 to both the current determining comparator 102 and the power supply switching comparator 103; however, the boot up power supply circuit 14 may also supply electrical power to another member.

On the AC adapter line 17 extending from the AC adapter connector 11, the FET switches 201 and 202 and the AC adapter current sensing resistor 18 are arranged.

The FET switches 201 and 202 are turned on and off in response to the control performed by the power supply switching comparator 103, which will be described later.

Specifically, if the FET switches 201 and 202 receive an input of a signal with a High voltage (hereinafter, simply be referred to as a "High signal") from the power supply switching comparator 103, the FET switches 201 and 202 are turned on. If the FET switches 201 and 202 are turned on, the electrical power output from the AC adapter 2 is supplied to the CPU 20 and the miscellaneous system 21 passing through the AC adapter current sensing resistor 18 via the FET switches 201 and 202.

In contrast, if the FET switches 201 and 202 receive an input of a signal with Low voltage (hereinafter, simply be referred ti as a "Low signal") from the power supply switching comparator 103, the FET switches 201 and 202 are turned off. If the FET switches 201 and 202 are turned off, the electrical power output from the AC adapter 2 is not supplied to the CPU 20 and the miscellaneous system 21 because the AC adapter line 17 is cut off. Furthermore, the AC adapter current does not flow through the AC adapter current sensing resistor 18 either. In this case, the electrical power output from the battery 13 is supplied to the CPU 20 and the miscellaneous system 21.

The AC adapter identifying circuit 10 includes the voltage determining comparator 101, the current determining comparator 102, the power supply switching comparator 103 and the electrical power saving control circuit 104. The AC adapter identifying circuit 10 mentioned here corresponds to an example of a "power supply monitoring circuit".

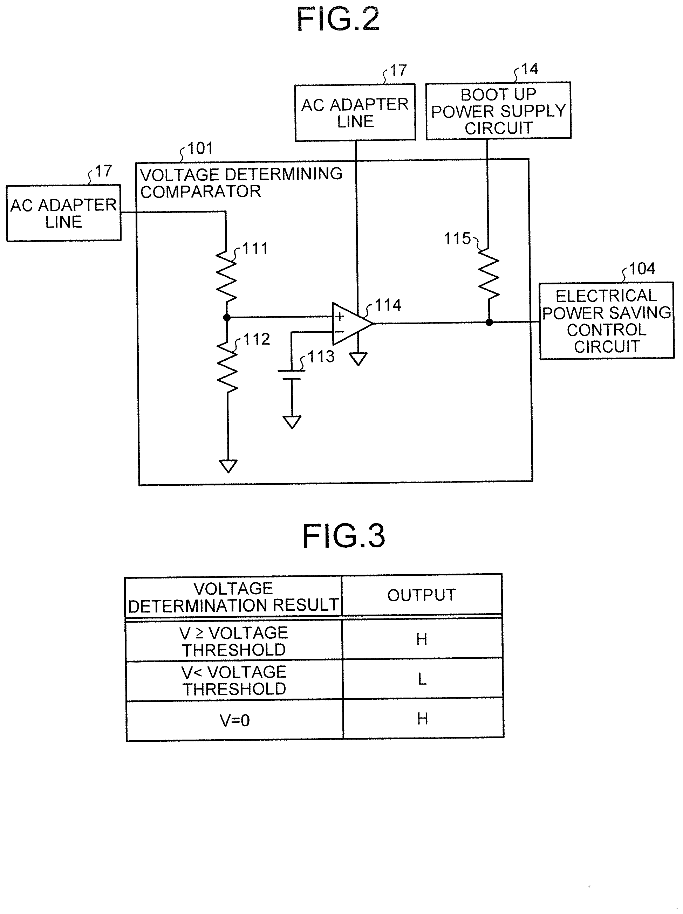

In the following, the voltage determining comparator 101 will be described with reference to FIG. 2. FIG. 2 is a circuit diagram illustrating a voltage determining comparator. The voltage determining comparator 101 mentioned here corresponds to an example of a "first determining unit".

The voltage determining comparator 101 includes resistors 111 and 112 on the signal path to which an AC adapter voltage as a signal is input from the AC adapter line 17. Furthermore, the end portion at the opposite side from the resistor 112, to which the AC adapter voltage is input, on the signal path is connected to ground.

Furthermore, the signal path is branched off between the resistors 111 and 112 and is connected to a comparator 114. The resistors 111 and 112 divide the signal from the AC adapter line 17. Then, the signal divided by the resistors 111 and 112 is supplied to the comparator 114. For example, the signal with the voltage of {2/(R1+R2)}×V1 is input to the comparator 114, where the resistance of the resistor 111 is R1 (Ω), the resistance of the resistor 112 is R2 (Ω), and the voltage of an input signal from the AC adapter line 17 is V1 (V).

The comparator 114 is a comparator with open drain output. The comparator 114 is driven by electrical power supplied from the AC adapter line 17.

The signal line on the output side of the comparator 114 is connected to the electrical power saving control circuit 104. Furthermore, the signal line that connects the comparator 114 to the electrical power saving control circuit 104 is connected to the boot up power supply circuit 14 via a resistor 115. The resistor 115 is a pull-up resistor.

The comparator 114 is not driven when the AC adapter 2 is not connected to the AC adapter connector 11. In such a case, the signal that is input to the electrical power saving control circuit 104 is a signal with the electric potential of the resistor 115. Specifically, if the AC adapter 2 is not connected to the AC adapter connector 11, the voltage determining comparator 101 inputs the High signal to the electrical power saving control circuit 104.

If the AC adapter 2 is connected to the AC adapter connector 11, the comparator 114 receives an input of the signal that is divided by the resistors 111 and 112. Furthermore, the comparator 114 receives an input of the reference voltage from a reference voltage 113.

The comparator 114 compares the voltage of the signal divided by the resistors 111 and 112 with the reference voltage and outputs, if the voltage of the signal divided by the resistors 111 and 112 is equal to or greater than the reference voltage, the High signal to the electrical power saving control circuit 104. Furthermore, if the voltage of the signal divided by the resistors 111 and 112 is lower than the reference voltage, the comparator 114 outputs the Low signal to the electrical power saving control circuit 104.

At this point, if the AC adapter 2 operates normally, the voltage of the signal divided by the resistors 111 and 112 becomes equal to or greater than the reference voltage. Consequently, if the AC adapter 2 operates normally, the voltage determining comparator 101 outputs the High signal to the electrical power saving control circuit 104. In contrast, if a voltage drop becomes large when the AC adapter 2 operated in the turbo mode or if an AC adapter voltage drops because the protection circuit 23 is operated, a state occurs in which the voltage of the signal divided by the resistors 111 and 112 falls below the reference voltage. Accordingly, in such a case, the voltage determining comparator 101 outputs the Low signal to the electrical power saving control circuit 104.

In other words, the voltage determining comparator 101 can determine whether an AC adapter voltage drops by using the voltage of the signal output from the reference voltage 113 as a threshold. Specifically, by adjusting the reference voltage 113, the voltage determining comparator 101 can determine whether the AC adapter voltage falls below the electrical power threshold that is the reference for determining whether the AC adapter voltage is unusually low. Specifically, by setting the reference voltage 113 such that the voltage threshold is lower than the lower limit of the AC adapter voltage in the rated state of the AC adapter 2 by a predetermined value, the voltage determining comparator 101 can determine whether the AC adapter 2 is deviated from the rated state. For example, the reference voltage 113 is set such that the voltage threshold is lower than the lower limit of the AC adapter voltage in the rated state of the AC adapter 2 by 1 (V). However, it is preferable to set the voltage threshold greater than the voltage value that is used by the power supply switching comparator 103, which will be described later, to turn off the FET switches 201 and 202. By setting the reference voltage 113 in this way, the electrical power saving control circuit 104, which will be described later, can solve a problem by shifting to the electrical power saving mode before the power supply switching comparator 103 detects an abnormality of the AC adapter 2 and disconnects a supply of electrical power.

The output from the voltage determining comparator 101 described above can be schematically represented by the diagram illustrated in FIG. 3. FIG. 3 is a schematic diagram illustrating an output from the voltage determining comparator. In the column entitled "output" illustrated in FIG. 3, symbol "H" indicates an output of the High signal and symbol "L" indicates an output of the Low signal.

When the AC adapter voltage is V, if V is equal to or greater than a voltage threshold, the voltage determining comparator 101 outputs the High signal. Furthermore, if V is lower than the voltage threshold, the voltage determining comparator 101 outputs the Low signal. Furthermore, if the AC adapter 2 is not connected, the state at that time is V=0; therefore, the voltage determining comparator 101 outputs the High signal.

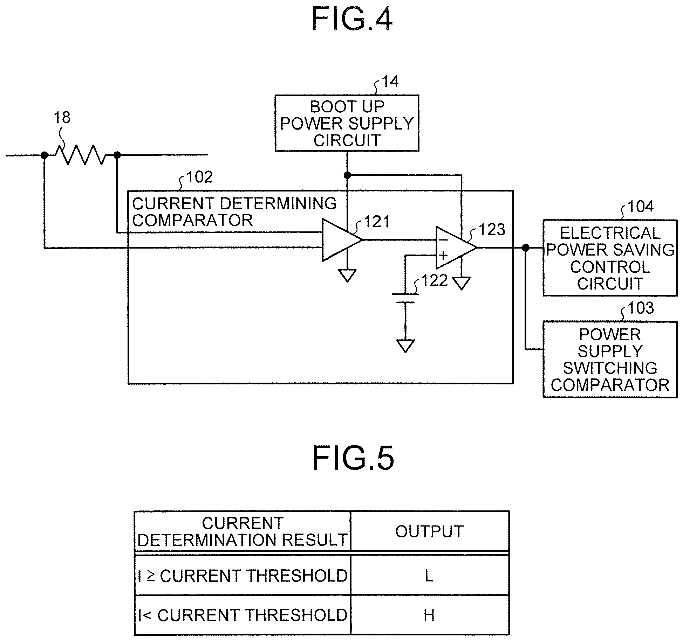

In the following, the current determining comparator 102 will be described with reference to FIG. 4. FIG. 4 is a circuit diagram illustrating a current determining comparator. The current determining comparator 102 mentioned here corresponds to a "second determining unit".

An amplifier 121 and a comparator 123 in the current determining comparator 102 are driven by the electrical power supplied from the boot up power supply circuit 14.

The amplifier 121 is a differential amplifier. A voltage on the input side and the voltage on the output side of the AC adapter current sensing resistor 18 are input to the amplifier 121. Then, the amplifier 121 amplifies the difference between the input voltages and then outputs the amplified voltage to the comparator 123.

The comparator 123 is a push-pull output comparator. The comparator 123 receives an input of a voltage from the amplifier 121. Furthermore, the comparator 123 receives an input of the reference voltage from a reference voltage 122.

The comparator 123 compares the voltage input from the amplifier 121 with the reference voltage. If the voltage input from the amplifier 121 is equal to or greater than the reference voltage, the comparator 123 outputs the Low signal. Furthermore, if the voltage input from the amplifier 121 is lower than the reference voltage, the comparator 123 outputs the High signal.

If the current flowing through the AC adapter current sensing resistor 18 increases, the difference between the voltage on the input side and the voltage on the output side of the AC adapter current sensing resistor 18 becomes large. Specifically, if the AC adapter current with a value equal to or greater than a predetermined value that is taken on the basis of the reference voltage 122 is flowing through the AC adapter current sensing resistor 18, the comparator 123 outputs the Low signal. Furthermore, if the AC adapter current with a value less than the predetermined value is flowing through the AC adapter current sensing resistor 18, the comparator 123 outputs the High signal. Specifically, by adjusting both the amplification factor of the amplifier 121 and the voltage output from the reference voltage 122, the current determining comparator 102 can determine whether the AC adapter current is greater than the current threshold. Furthermore, the reference voltage 122 is preferably set such that the current threshold satisfies an appropriate condition. For example, the current threshold may also be the lower limit value of the AC adapter current that is conceivably flowing when the AC adapter 2 is connected to the AC adapter connector 11 and is running. Furthermore, the current threshold may also be the value of the current flowing when the load applied to the CPU 20 is equal to or greater than a predetermined value.

The output of the current determining comparator 102 described above can be schematically represented by the diagram illustrated in FIG. 5. FIG. 5 is a schematic diagram illustrating an output from the current determining comparator. In the column entitled "output" illustrated in FIG. 5, symbol "H" indicates an output of the High signal and symbol "L" indicates an output of the Low signal.

When the AC adapter current is I, if I is equal to or greater than the current threshold, the current determining comparator 102 outputs the Low signal. Furthermore, if I is lower than the current threshold, the current determining comparator 102 outputs the High signal.

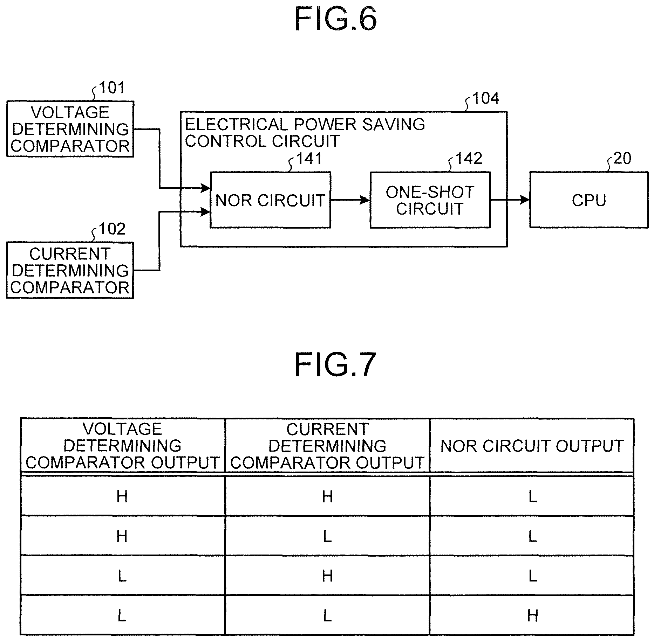

In the following, the electrical power saving control circuit 104 will be described with reference to FIG. 6. FIG. 6 is a block diagram illustrating an electrical power saving control circuit. The electrical power saving control circuit 104 includes a NOR circuit 141 and a one-shot circuit 142.

The NOR circuit 141 receives an input of a signal from each of the voltage determining comparator 101 and the current determining comparator 102. Then, the NOR circuit 141 outputs logical NOR of the two input signals to the one-shot circuit 142.

FIG. 7 is a schematic diagram illustrating an output from a NOR circuit. The NOR circuit 141 outputs the Low signal only when the output of the voltage determining comparator 101 and the output of the current determining comparator 102 are the High signal. In other conditions, the NOR circuit 141 outputs the Low signal.

Specifically, the NOR circuit 141 outputs the High signal only when the AC adapter voltage is lower than the voltage threshold and the AC adapter current is greater than the current threshold. In other words, the NOR circuit 141 outputs the High signal when, in the state in which an appropriate AC adapter 2 is connected, the AC adapter voltage is lower than the lower limit of the AC adapter voltage in the rated state of the AC adapter 2. In such a case, it is assumed that the NOR circuit 141 determines that the voltage of the electrical power supplied to the AC adapter 2 is too high.

The one-shot circuit 142 receives an input of a signal from the NOR circuit 141. If the High signal is input from the NOR circuit 141, the one-shot circuit 142 continues to output the High signal to the control terminal in the electrical power saving mode in the CPU 20 for a certain time period.

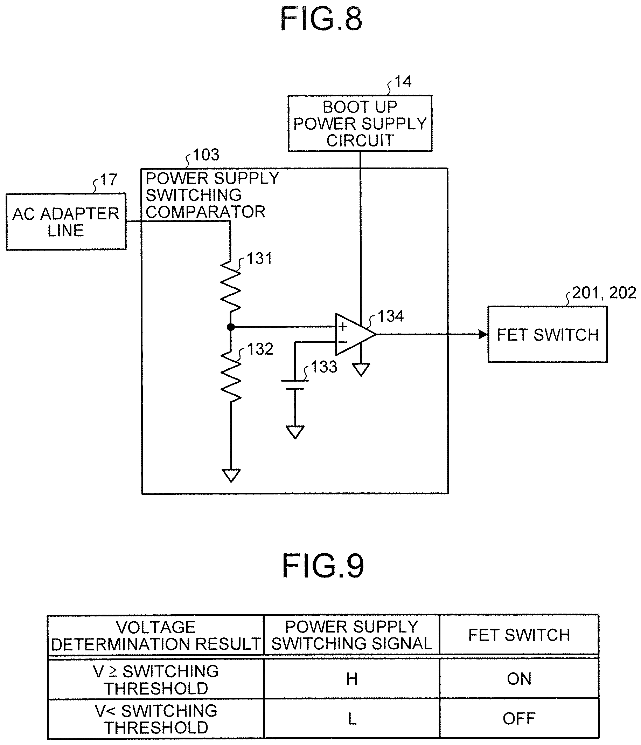

In the following, the power supply switching comparator 103 will be described with reference to FIG. 8. FIG. 8 is a circuit diagram illustrating a power supply switching comparator according to a first embodiment. The power supply switching comparator 103 mentioned here corresponds to an example of a "power supply switching circuit".

The power supply switching comparator 103 is a circuit that selects one of the AC adapter 2 and the battery 13 as the electrical power source. The power supply switching comparator 103 includes resistors 131 and 132 on the signal path to which an AC adapter voltage as a signal is input from the AC adapter line 17. Furthermore, the end portion at the opposite side from the resistor 132, to which the AC adapter voltage is input, arranged on the signal path is connected to ground.

Furthermore, the signal path is branched off between the resistors 131 and 132 and is connected to a comparator 134. The resistors 131 and 132 divide the signal from the AC adapter line 17. Then, the signal divided by the resistors 131 and 132 is supplied to the comparator 134.

The comparator 134 is a push-pull output comparator. The comparator 134 is driven by the electrical power supplied from the boot up power supply circuit 14.

The signal line on the output side of the comparator 134 is connected to the FET switches 201 and 202.

The comparator 134 receives an input of the signal divided by the resistors 131 and 132. Furthermore, the comparator 134 receives an input of the reference voltage from a reference voltage 133.

The comparator 134 compares the voltage of the signal divided by the resistors 131 and 132 with the reference voltage and outputs, if the voltage of the signal divided by the resistors 131 and 132 is equal to or greater than the reference voltage, the High signal to the FET switches 201 and 202 as a power supply switching signal. Furthermore, if the voltage of the signal divided by the resistors 131 and 132 is lower than the reference voltage, the comparator 134 outputs the Low signal to the FET switches 201 and 202 as a power supply switching signal.

At this point, if the connected AC adapter 2 is appropriate, the voltage of the signal divided by the resistors 131 and 132 is equal to or greater than the reference voltage. Consequently, if the appropriate AC adapter 2 is connected, the power supply switching comparator 103 outputs a High power supply switching signal to the FET switches 201 and 202. In contrast, if an inappropriate adapter is connected as the AC adapter 2, a state in which the voltage of the signal divided by the resistors 131 and 132 falls below the reference voltage occurs. Accordingly, in such a case, the power supply switching comparator 103 outputs a Low power supply switching signal to the FET switches 201 and 202.

In other words, the power supply switching comparator 103 can determine whether the AC adapter 2 is an appropriate adapter by using the voltage of the signal output from the reference voltage 133 as the threshold. Specifically, by setting the reference voltage 133 such that the value of the reference voltage 133 is lower than the lower limit of the AC adapter voltage in the rated state of the appropriate AC adapter 2 by a predetermined value, the power supply switching comparator 103 can determine whether the AC adapter 2 is appropriate for the adapter. For example, the reference voltage 133 is set such that the switching threshold, which is used for the reference for determining whether the AC adapter 2 is appropriate, is lower than the lower limit of the AC adapter voltage in the rated state of the AC adapter 2 by 1.4 (V). However, as described before, the switching threshold is preferably lower than the voltage threshold that is used by the voltage determining comparator 101 as the reference.

The output of the power supply switching comparator 103 described above can be schematically represented by the diagram illustrated in FIG. 9. FIG. 9 is a schematic diagram illustrating an output from the power supply switching comparator according to the first embodiment. In the column entitled "power supply switching signal" illustrated in FIG. 9, symbol "H" indicates an output of the High power supply switching signal and symbol "L" indicates an output of the Low power supply switching signal.

When the AC adapter voltage is V, if V is equal to or greater than the switching threshold, the power supply switching comparator 103 outputs the High power supply switching signal. In this case, the FET switches 201 and 202 are turned on (ON). Furthermore, if V is lower than the switching threshold, the power supply switching comparator 103 outputs the Low power supply switching signal. In this case, the FET switches 201 and 202 are turned off (OFF).

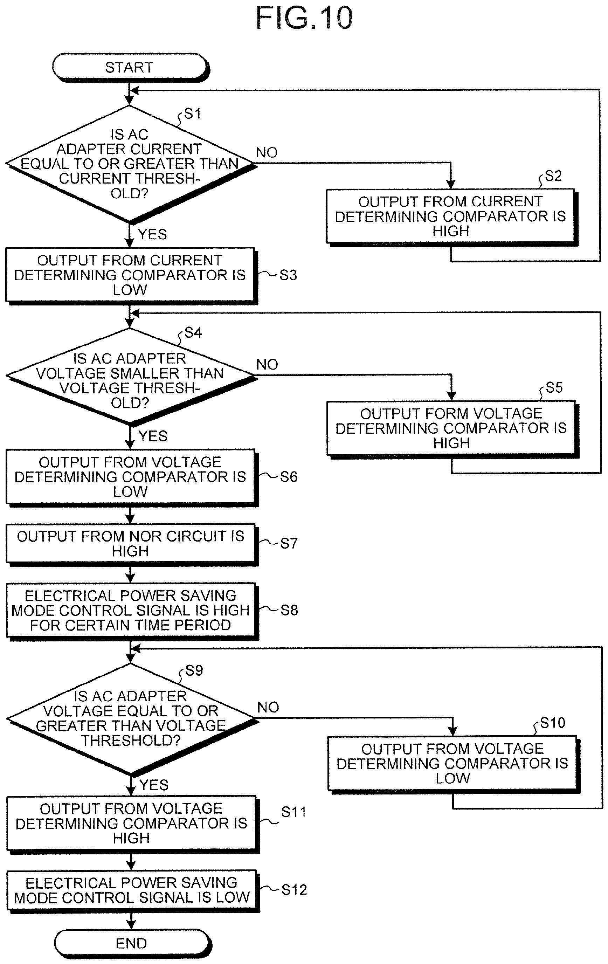

In the following, the overall flow of electrical power saving control performed by the AC adapter identifying circuit 10 according to the first embodiment will be described with reference to FIG. 10. FIG. 10 is a flowchart illustrating the flow of electrical power saving control performed by an AC adapter identifying circuit according to the first embodiment.

The current determining comparator 102 determines whether the AC adapter current is equal to or greater than the current threshold (Step S1). If the AC adapter current is smaller than the current threshold (No at Step S1), the current determining comparator 102 outputs the High signal. Specifically, the output of the current determining comparator 102 becomes High (Step S2). Then, the current determining comparator 102 returns to Step S1.

In contrast, if the AC adapter current is equal to or greater than the current threshold (Yes at Step S1), the current determining comparator 102 outputs the Low signal. Specifically, the output of the current determining comparator 102 becomes Low (Step S3).

Then, the voltage determining comparator 101 determines whether the AC adapter voltage is smaller than the voltage threshold (Step S4). If the AC adapter voltage is equal to or greater than the voltage threshold (No at Step S4), the voltage determining comparator 101 outputs the High signal. Specifically, the output of the voltage determining comparator 101 becomes High (Step S5). Then, the voltage determining comparator 101 returns to Step S4.

In contrast, if the AC adapter voltage is smaller than the voltage threshold (Yes at Step S4), the voltage determining comparator 101 outputs the Low signal. Specifically, the output of the voltage determining comparator 101 is Low (Step S6).

The NOR circuit 141 receives an input of the Low signal from both the voltage determining comparator 101 and the current determining comparator 102. Then, the output of the NOR circuit 141 becomes High (Step S7).

The one-shot circuit 142 receives an input of the High signal from the NOR circuit 141. Then, the one-shot circuit 142 allows the electrical power saving mode control signal to be High for a certain time period (Step S8). In response to the state in which the electrical power saving mode control signal becomes High, the CPU 20 shifts to the electrical power saving mode.

When the CPU 20 shifts to the electrical power saving mode, the electrical power consumed by the CPU 20 and the miscellaneous system 21 drops. In response to this state, the output voltage of the AC adapter 2 drops. In such a case, the impedance of the CPU 20 and the miscellaneous system 21 increases. For example, when the protection circuit 23 is running, if the impedance exceeds the threshold, a drop in the voltage performed by the protection circuit 23 is released. Then, the voltage determining comparator 101 determines whether the AC adapter voltage is equal to or greater than the voltage threshold (Step S9). If the AC adapter voltage is smaller than the voltage threshold (No at Step S9), because a drop in the voltage performed by the protection circuit 23 has not been released, the voltage determining comparator 101 outputs the Low signal. Specifically, the output from the voltage determining comparator 101 becomes Low (Step S10). In this case, the voltage determining comparator 101 returns to Step S9.

In contrast, if the AC adapter voltage is equal to or greater than the voltage threshold (Yes at Step S9), because a drop in the voltage performed by the protection circuit 23 has been released, the voltage determining comparator 101 outputs the High signal. Specifically, the output from the voltage determining comparator 101 becomes High (Step S11).

Because the High signal is input from the voltage determining comparator 101, the electrical power saving control circuit 104 outputs the Low signal as the electrical power saving mode control signal. Specifically, the electrical power saving mode control signal becomes Low (Step S12). When the CPU 20 receives an input of the Low signal as the electrical power saving mode control signal, the CPU 20 releases the electrical power saving mode.

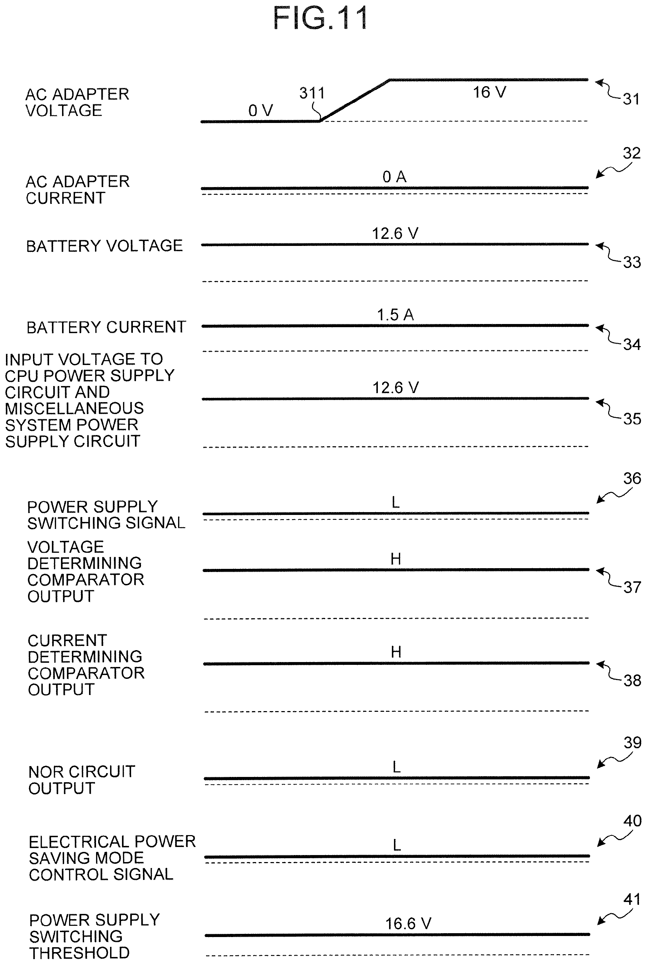

In the following, the operation of each of the circuits performed when the AC adapter 2, which is an unauthorized adapter having a low output voltage, is connected to the notebook PC 1 in the first embodiment will be described with reference to FIG. 11. FIG. 11 is a sequence diagram illustrating the circuit operation performed when an unauthorized AC adapter having a low output voltage is connected in the first embodiment.

A graph 31 illustrated in FIG. 11 is a graph that indicates the variation in the AC adapter voltage. A graph 32 is a graph that indicates the variation in the AC adapter current. A graph 33 is a graph that indicates the variation in the battery voltage that is the voltage supplied from a battery. A graph 34 is a graph that indicates the variation in the battery current that is the current supplied from the battery. A graph 35 is a graph that indicates the variation in the input voltage output to the CPU power supply circuit 15 and the miscellaneous system power supply circuit 16. A graph 36 is a graph that indicates the variation in the power supply switching signal. A graph 37 is a graph that indicates the variation in the output of the voltage determining comparator 101. A graph 38 is a graph that indicates the variation in the output from the current determining comparator 102. A graph 39 is a graph that indicates the output of the NOR circuit 141. A graph 40 is a graph that indicates the variation in the electrical power saving mode control signal. A graph 41 is a graph that indicates the variation in the power supply switching threshold.

In all of the graphs 31 to 39, an elapsed time is represented by the horizontal axis. Furthermore, in the graphs 31, 33, 35, and 41, the vertical axis indicates the voltage value. Furthermore, in the graphs 32 and 34, the vertical axis indicates the current value. Furthermore, in the graphs 36 to 40, the vertical axis indicates High/Low of the signal. Furthermore, in the graphs 31 to 39, the broken line indicates the reference value.

Furthermore, if the broken line overlaps with the reference value in a graph, in order to easy to understand, the target line indicated by the graph is upwardly shifted from the reference value. For example, in the graph 39, because the output of the NOR circuit 141 is always Low and overlaps with the reference value, the output line is indicated such that the line does not overlap with the reference value.

The reference value of the AC adapter voltage is 0 (V). Furthermore, because the AC adapter 2 is not connected at first, the AC adapter voltage is 0 (V) as indicated by the graph 31. Then, at a timing 311, the AC adapter 2, which is unauthorized, is connected to the AC adapter connector 11. At this point, it is assumed that the voltage in the rated state of the appropriate AC adapter 2 is 18 to 21 (V). In the following, a description will be given in a case in which the voltage of the connected unauthorized AC adapter 2 is 16 (V). In such a case, after the AC adapter 2 is connected, as indicated by the graph 31, the AC adapter voltage becomes 16 (V).

Furthermore, because the connected AC adapter 2 is an unauthorized adapter, the current does not flow and, as indicated by the graph 32, the AC adapter current maintains 0 (A).

Furthermore, as indicated by the graph 33, the battery voltage is always 12.6 (V).

In this case, as indicated by the graph 41, the power supply switching threshold is 16.6 (V) and the AC adapter voltage of 16 (V) is lower than the power supply switching threshold. Consequently, as indicated by the graph 36, the power supply switching signal output from the power supply switching comparator 103 is the Low signal before and after the AC adapter 2 is connected. Accordingly, the FET switches 201 and 202 remain to be turned off.

Because the FET switches 201 and 202 are always turned off, the electrical power from the battery 13 is supplied to both the CPU 20 and the miscellaneous system 21 and, furthermore, the battery current maintains, as indicated by the graph 34, the value of 1.5 (A).

In this case, as indicated by the graph 35, the voltage input to each of the CPU power supply circuit 15 and the miscellaneous system power supply circuit 16 is 12.6 (V) that is the same as the battery voltage.

The voltage threshold of the voltage determining comparator 101 is 17 (V) that is greater than the power supply switching threshold. However, because the AC adapter 2 is an unauthorized AC adapter, the comparator 114 is not driven. Consequently, the voltage is increased by the resistor 115 and the output of the voltage determining comparator 101 is always High, as indicated by the graph 37.

Furthermore, it is assumed that the current threshold of the current determining comparator 102 is 1.5 (A). In this case, as indicated by the graph 32, because the AC adapter current is 0 (A), the output of the current determining comparator 102 is always High as indicated by the graph 38.

The High signal is input to the NOR circuit 141 from both the voltage determining comparator 101 and the current determining comparator 102. Consequently, as indicated by the graph 39, the Low signal is maintained for the output of the NOR circuit 141.

Because the output of the NOR circuit 141 is Low, as indicated by the graph 40, Low is maintained in the electrical power saving mode control signal that is output from the electrical power saving control circuit 104. Specifically, the CPU 20 maintains the current state without shifting to the electrical power saving mode.

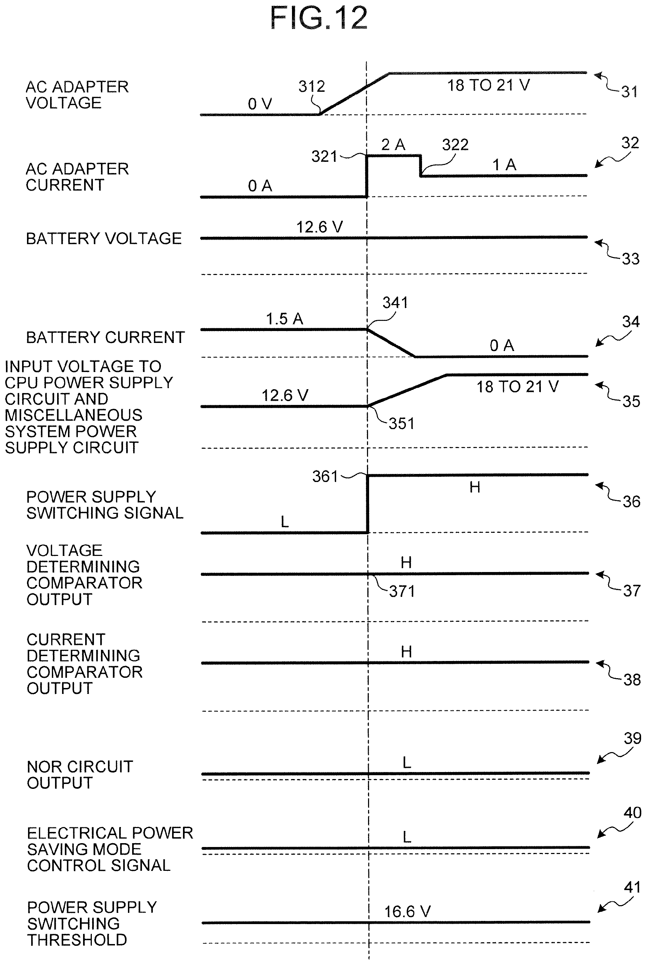

In the following, the operation of each of the circuits when the AC adapter 2 is connected to the notebook PC 1 in the state in which the battery 13 is running in the first embodiment will be described with reference to FIG. 12. FIG. 12 is a sequence diagram illustrating the circuit operation performed when an AC adapter is connected in a state in which a battery is running in the first embodiment. In the graphs 31 to 41 illustrated in FIG. 12, the vertical axis, the horizontal axis, and the reference value indicate the same as those used in FIG. 11.

Because the AC adapter 2 is not connected at first, as indicated by the graph 31, the AC adapter voltage is 0 (V). Then, at a timing 312, the appropriate AC adapter 2 is connected to the AC adapter connector 11. Then, because the connected AC adapter 2 is an appropriate adapter, after the AC adapter 2 is connected, as indicated by the graph 31, the AC adapter voltage becomes 18 to 21 (V).

Furthermore, as indicated by the graph 33, the battery voltage is always 12.6 (V).

In this case, as indicated by the graph 41, because the power supply switching threshold is 16.6 (V), the AC adapter voltage of 18 to 21 (V) is greater than the power supply switching threshold. Consequently, as indicated by the graph 36, the power supply switching signal output from the power supply switching comparator 103 shifts from Low to High at a timing 361. Consequently, the state of the FET switches 201 and 202 shifts from OFF to ON at the timing 361.

As indicated by the graph 32, because the FET switches 201 and 202 are turned on at a timing 321, the AC adapter current rises up to 2 A at the timing 321 due to the inrush current input to an input capacitor, such as the CPU power supply circuit 15, of an onboard power supply. Then, the AC adapter current remains at 1 (A) after a timing 322.

As indicated by the graph 34, because the FET switches 201 and 202 are turned on at a timing 341, the battery current gradually drops at the timing 341 and then finally drops to 0 (A).

In this case, as indicated by the graph 35, the input voltage to the CPU power supply circuit 15 and the miscellaneous system power supply circuit 16 starts to increase, at a timing 351, from 12.6 (V), which is the same voltage as the battery voltage, up to 18 to 21 (V), which is the same voltages as the AC adapter voltage.

Before the FET switches 201 and 202 are turned on, because the AC adapter 2 is not connected, the comparator 114 is not driven. Consequently, the voltage is increased by the resistor 115 and thus the output of the voltage determining comparator 101 becomes High until a timing 371, as indicated by the graph 37. Then, the AC adapter voltage becomes 18 to 21 (V), which is greater than the voltage threshold of 17 (V); therefore, the output of the voltage determining comparator 101 remains High after the timing 371.

In this case, as indicated by the graph 32, because the AC adapter current is 1 (A) and is less than the current threshold of 1.5 (A), the output of the current determining comparator 102 is always High as indicated by the graph 38. However, it is assumed that the current determining comparator 102 does not detect an instantaneous rise in the current due to the inrush current.

The High signal is input to the NOR circuit 141 from both the voltage determining comparator 101 and the current determining comparator 102. Consequently, as indicated by the graph 39, the Low signal is maintained in the output of the NOR circuit 141.

Because the output of the NOR circuit 141 is Low, as indicated by the graph 40, Low is maintained in the electrical power saving mode control signal that is output from the electrical power saving control circuit 104. Specifically, the CPU 20 maintains the current state without shifting to the electrical power saving mode.

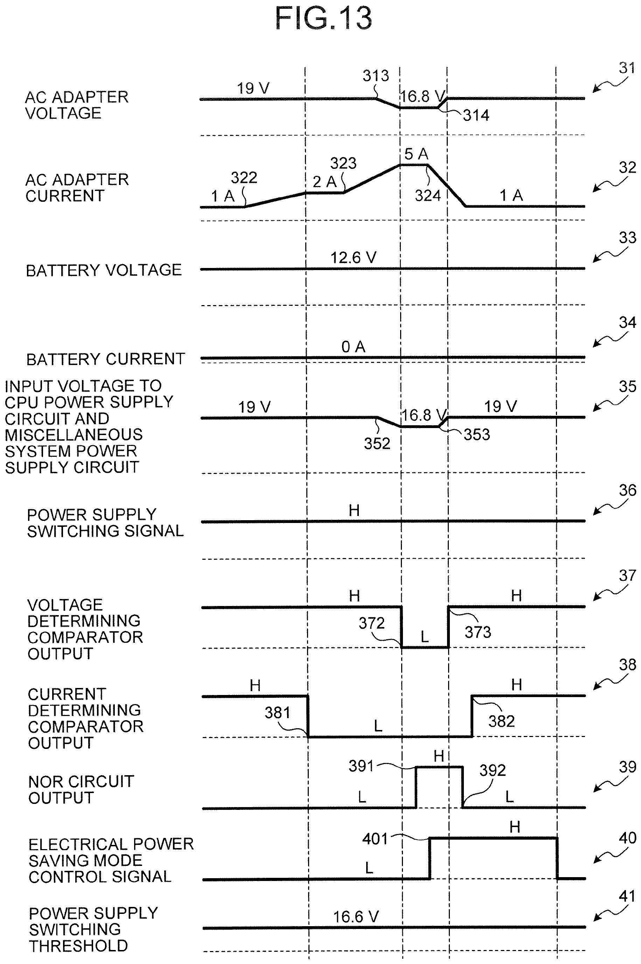

In the following, the operation of each of the circuits when the capacity of the AC adapter 2 exceeds after the mode is shifted to the turbo mode while the AC adapter 2 is being connected to the notebook PC 1 in the first embodiment will be described with reference to FIG. 13. FIG. 13 is a sequence diagram illustrating the circuit operation performed when, in the first embodiment, the capacity of an AC adapter exceeds after a mode is shifted to the turbo mode while the AC adapter is being connected. In the graphs 31 to 41 illustrated in FIG. 13, the vertical axis, the horizontal axis, and the reference value indicate the same as those used in FIG. 11.

Because the AC adapter 2 has already been connected, the AC adapter voltage is 19 (V) at first as indicated by the graph 31. Furthermore, as indicated by the graph 32, the AC adapter current is 1 (A) at first.

Then, at the timing 322 indicated by the graph 32, the CPU 20 starts a process that has a high processing load. Because the load applied to the CPU 20 increases, the AC adapter current starts to increase at the timing 322. Then, as indicated by the graph 38, if the AC adapter current increases and exceeds the current threshold, the output of the current determining comparator 102 shifts from the High to Low at a timing 381.

Because the processing load is high, the CPU 20 shifts to the turbo mode. The AC adapter current further increases at a timing 323 at which the mode is shifted to the turbo mode. Then, if the impedance of the CPU 20 and the miscellaneous system 21 falls below the predetermined value, the protection circuit 23 determines that the capacity of the AC adapter 2 exceeds and then drops the AC adapter voltage. Consequently, as indicated by the graph 31, the AC adapter voltage drops at a timing 313. In this case, as indicated by the graph 35, the input voltage to each of the CPU power supply circuit 15 and the miscellaneous system power supply circuit 16 also drops at a timing 352.

Then, as indicated by the graph 37, at a timing 372 at which the AC adapter voltage drops and falls below the voltage threshold, the output of the voltage determining comparator 101 shifts from High to Low. At this point, it is assumed that the AC adapter voltage drops to 16.8 (V).

In this case, as indicated by the graph 41, the power supply switching threshold is 16.6 (V) and the AC adapter voltage is equal to or greater than the power supply switching threshold. Accordingly, as indicated by the graph 36, the power supply switching signal remains High. Specifically, the FET switches 201 and 202 remain to be turned on.

At this point, the Low signal is input to the NOR circuit 141 from both the voltage determining comparator 101 and the current determining comparator 102. Accordingly, as indicated by the graph 39, the output of the NOR circuit 141 is changed from Low to High at a timing 391. Then, as indicated by the graph 40, the one-shot circuit 142 in the electrical power saving control circuit 104 outputs a High electrical power saving mode control signal for a certain time period after a timing 401. In response to this state, the CPU 20 shifts to the electrical power saving mode.

Because the mode is shifted to the electrical power saving mode, the impedance of the CPU 20 and the miscellaneous system 21 increases. Consequently, as indicated by the graph 32, the AC adapter current drops after a timing 324. Then, the AC adapter current remains at 1 (A). Thereafter, as indicated by the graph 38, at a timing 382 at which the AC adapter current falls below the current threshold, the output of the current determining comparator 102 shifts from Low to High.

When the impedance of the CPU 20 and the miscellaneous system 21 exceeds the threshold, the protection circuit 23 releases the drop in the AC adapter voltage. Consequently, as indicated by the graph 31, the AC adapter voltage increases after a timing 314. In response to this state, as indicated by the graph 35, the input voltage to the CPU power supply circuit 15 and the miscellaneous system power supply circuit 16 starts to increase after a timing 353. Then, the AC adapter voltage and the input voltage to the CPU power supply circuit 15 and the miscellaneous system power supply circuit 16 remain at 19 (V).

Then, as indicated by the graph 37, when the AC adapter voltage exceeds the voltage threshold, the output of the voltage determining comparator 101 shifts from Low to High at a timing 373.

In this state, as indicated by the graph 39, the output of the NOR circuit 141 shifts from High to Low at a timing 392 at which the output of the voltage determining comparator 101 is changed to High.

As described above, by shifting the CPU 20 and the miscellaneous system 21 to the electrical power saving mode without immediately interrupting the electrical power supplied from the AC adapter 2 even if the capacity of the AC adapter 2 exceeds, the electrical power supply can be maintained while the electrical power consumption is reduced and the electrical power supply is controlled to be within the capacity of the AC adapter 2.

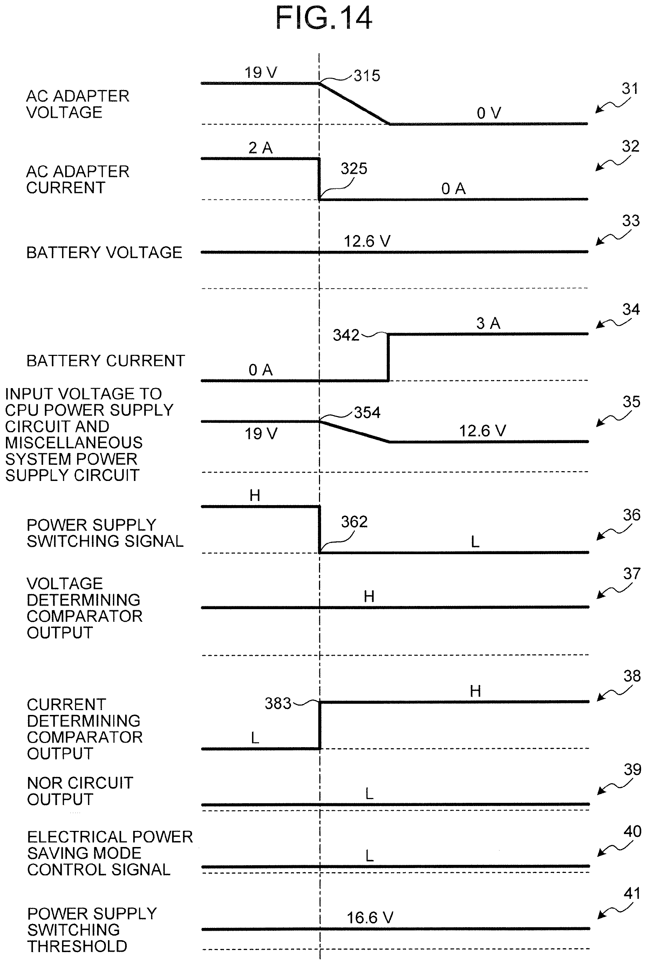

In the following, the operation of each of the circuits when the AC adapter 2 is disconnected from the notebook PC 1 in the first embodiment will be described with reference to FIG. 14. FIG. 14 is a sequence diagram illustrating the circuit operation performed when the AC adapter is disconnected in the first embodiment. In the graphs 31 to 41 illustrated in FIG. 14, the vertical axis, the horizontal axis, and the reference value indicate the same as those used in FIG. 11.

Because the AC adapter 2 is connected at first, as indicated by the graph 31, the AC adapter voltage is 19 (V). Then, at a timing 315, the AC adapter 2 is disconnected from the AC adapter connector 11. When the AC adapter 2 is disconnected, the AC adapter voltage drops to 0 (V).

As indicated by the graph 32, the AC adapter current is 2 (A) because a process that has a processing load is being performed at first. Then, the AC adapter current becomes 0 (A) at a timing 325 at which the AC adapter 2 is disconnected.

At this point, the AC adapter voltage is 0 (V) and is lower than the power supply switching threshold. Consequently, as indicated by the graph 36, the power supply switching signal that is output from the power supply switching comparator 103 shifts from High to Low at a timing 362. Consequently, the FET switches 201 and 202 are turned off from the on state at the timing 362.

As indicated by the graph 33, the battery voltage is always 12.6 (V).

After the FET switches 201 and 202 are turned off, because an input capacitor, such as the CPU power supply circuit 15 or the like, of an onboard power supply is discharged, a supply of the electrical power from the battery 13 is delayed. Consequently, as indicated by the graph 34, the battery current increases up to 3 (A) at a timing 342 that is little later the timing 362 at which the FET switches 201 and 202 are turned off.

At this point, as indicated by the graph 35, the input voltage to the CPU power supply circuit 15 and the miscellaneous system power supply circuit 16 starts to drop, at a timing 354, from the AC adapter voltage of 19 (V) to 12.6 (V) that is the same voltage as the battery voltage.

Furthermore, before the FET switches 201 and 202 are turned off, because the AC adapter voltage is 19 (V) and is equal to or greater than the voltage threshold of 17 (V), as indicated by the graph 37, the output of the voltage determining comparator 101 becomes High. When the AC adapter is disconnected, the electrical power supply to the comparator 114 stops and thus the comparator 114 stops. Consequently, the voltage is increased by the resistor 115 and, as indicated by the graph 37, the output of the voltage determining comparator 101 becomes High.

Furthermore, before the FET switches 201 and 202 are turned off, because the AC adapter current is 2 (A) and thus is equal to or greater than the current threshold of 1.5 (A), as indicated by the graph 38, the output of the current determining comparator 102 becomes Low. Thereafter, as indicated by the graph 38, when the AC adapter 2 is disconnected, the AC adapter current becomes 0 (A) and thus the output of the current determining comparator 102 shifts from Low to High at a timing 383.

The High signal is input to the NOR circuit 141 from the voltage determining comparator 101. Consequently, as indicated by the graph 39, the Low signal is maintained for the output from the NOR circuit 141.

Because the output of the NOR circuit 141 is Low, as indicated by the graph 40, the electrical power saving mode control signal that is output from the electrical power saving control circuit 104 is maintained at Low. Specifically, the CPU 20 maintains the current state without shifting to the electrical power saving mode.

As described above, the power supply monitoring circuit according to the first embodiment shifts the CPU 20 and the miscellaneous system 21 in an information processing apparatus to the electrical power saving mode without immediately interrupting the electrical power supply from the AC adapter even when the supplied electrical power exceeds the capacity of the AC adapter. Consequently, when an electrical power supply exceeds the capacity of the AC adapter, the electrical power supply from the AC adapter can be maintained while the electrical power consumed by the CPU 20 and the miscellaneous system 21 is reduced and the electrical power supply is controlled to be within the capacity of the AC adapter.

Furthermore, if an unauthorized AC adapter is connected, the power supply monitoring circuit according to the first embodiment detects this state and thus does not allow a supply of electrical power from the AC adapter. Consequently, the reliability of the information processing apparatus can be maintained.

Accordingly, an external power supply can be efficiently used up to the upper limit of the capacity of the electrical power supply while the reliability is maintained.

### [b] Second Embodiment

In the following, an information processing apparatus according to a second embodiment will be described. The information processing apparatus according to the second embodiment differs from the first embodiment in that a power supply switching threshold is changed. A notebook PC that is the information processing apparatus according to the second embodiment is also illustrated in the block diagram in FIG. 1. In a description below, descriptions of the units having the same functions as those performed by the units in the first embodiment will be omitted.

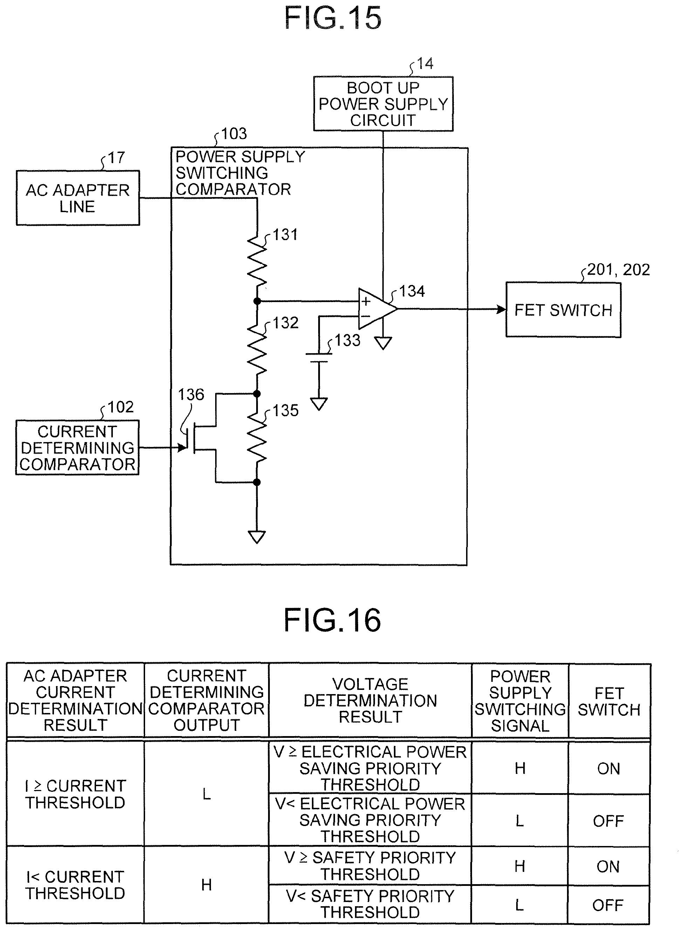

FIG. 15 is a circuit diagram illustrating a power supply switching comparator according to a second embodiment. In the power supply switching comparator 103 according to the second embodiment, a resistor 135 and a FET switch 136 are added to the power supply switching comparator 103 according to the first embodiment.

The resistor 135 is arranged on the output side of the resistor 132. Furthermore, the end portion on the output side of the resistor 135 is connected to ground.

Furthermore, the FET switch 136 is arranged on a path that is arranged to bypass both ends of the resistor 135. Then, the FET switch 136 receives an input of the current determining comparator 102. When the input of the current determining comparator 102 is the High signal, the FET switch 136 is turned on. Furthermore, when the input of the current determining comparator 102 is the Low signal, the FET switch 136 is turned off.

When the FET switch 136 is turned on, the comparator 134 receives an input of a signal divided by the resistors 131 and 132. Furthermore, when the FET switch 136 is turned off, the comparator 134 receives a signal divided by the resistors 131, 132, and 135.

Here, it is assume that the resistor 131 is R1 (Ω), the resistor 132 is R2 (Ω), the resistor 135 is R3 (Ω), and the AC adapter voltage is V1 (V). In such a case, when the FET switch 136 is turned on, the comparator 134 receives the input of the signal with the voltage of {R2/(R1+R2)}xV1(V). In contrast, when the FET switch 136 is turned off, the comparator 134 receives an input of the signal with the voltage of {(R2+R3)/(R1+R2+R3)}xV1 (V).

Specifically, when the FET switch 136 is turned off, the comparator 134 receives an input of a signal with a voltage that is higher than that received when the FET switch 136 is turned on.

At this point, if the AC adapter current is equal to or greater than the current threshold, because the output of the current determining comparator becomes Low, the FET switch 136 is turned off. Furthermore, if the AC adapter current is smaller than the current threshold, because the output from the current determining comparator 102 becomes High, the FET switch 136 is turned on.

Specifically, when the AC adapter current is equal to or greater than the current threshold, the comparator 134 receives an input of a signal with a voltage that is higher than that received when the AC adapter current is smaller than the current threshold.

The comparator 134 compares the voltage of the divided signal with the reference voltage. If the voltage of the divided signal is equal to or greater than the reference voltage, the comparator 134 outputs the High signal as the power supply switching signal to the FET switches 201 and 202. Furthermore, if the voltage of the divided signal is less than the reference voltage, the comparator 134 outputs the Low signal as the power supply switching signal to the FET switches 201 and 202.

Then, if the AC adapter current is equal to or greater than the current threshold, because the comparator 134 receives an input of a voltage that is higher than that input when the AC adapter current is smaller than the current threshold, it is more difficult for the comparator 134 to output the Low signal when the AC adapter current is equal to or greater than the current threshold compared with a case in which the AC adapter current is smaller than the current threshold. Specifically, the power supply switching threshold used when the AC adapter current is equal to or greater than the current threshold is lower than the power supply switching threshold used when the AC adapter current is smaller than the current threshold.

For example, when the current threshold is set to the current value that is obtained when a process with a predetermined amount processing load is performed, the state in which the AC adapter current is equal to or greater than the current threshold indicates the state in which the CPU 20 performs a process with a predetermined amount of processing load in response to receiving an electrical power supply from the AC adapter 2. Specifically, if the AC adapter 2, which is an appropriate adapter, is connected and if a process with a certain amount of high processing load is performed, the power supply switching threshold needs to be decreased.

The reason for this is as follows. Namely, because the AC adapter 2 is appropriate, an unauthorized AC adapter does not need to be detected. However, because the processing load of the CPU 20 or the miscellaneous system 21 is high, there is a high possibility that the mode has been shifted to the turbo mode. Accordingly, without interrupting the electrical power supply from the AC adapter 2 as much as possible, the electrical power supplied from the AC adapter 2 needs to be reduced, with priority, within the capacity of the AC adapter 2 by shifting the mode to the electrical power saving mode. Hereinafter, the power supply switching threshold used when the AC adapter current is equal to or greater than the current threshold is referred to as an "electrical power saving priority threshold". Furthermore, the power supply switching threshold used when the AC adapter current is smaller than the current threshold is referred to as a "safety priority threshold". The electrical power saving priority threshold mentioned here corresponds to an example of a "first threshold". Furthermore, the safety priority threshold mentioned here corresponds to an example of a "second threshold".

However, the electrical power saving priority threshold preferably be a value smaller than the voltage determining threshold. The reason for this is to avoid, before the mode is shifted to the electrical power saving mode, an interruption of a supply of electrical power from the AC adapter 2. Furthermore, the safety priority threshold is preferably a value greater than the voltage determining threshold. The reason for this is to interrupt, when the unauthorized AC adapter 2 is connected, a supply of electrical power from the AC adapter 2 before the mode is shifted to the electrical power saving mode.

The output from the power supply switching comparator 103 described above can be schematically represented by the diagram illustrated in FIG. 16. FIG. 16 is a schematic diagram illustrating an output from a power supply switching comparator according to the second embodiment. In the column entitled "output of the current determining comparator 102" and "power supply switching signal" illustrated in FIG. 16, symbol "H" indicates an output of a High power supply switching signal and symbol "L" indicates an output of a Low power supply switching signal.

When the AC adapter current is I and the AC adapter voltage is V, if I is equal to or greater than the current threshold, the current determining comparator 102 outputs the Low signal and the FET switch 136 is turned off. In this case, the power supply switching threshold to be used is the electrical power saving priority threshold. Accordingly, if V is equal to or greater than the electrical power saving priority threshold, the power supply switching comparator 103 outputs the High power supply switching signal. In this case, the FET switches 201 and 202 are turned on (ON). Furthermore, if V is lower than the electrical power saving priority threshold, the power supply switching comparator 103 outputs a Low power supply switching signal. In this case, the FET switches 201 and 202 are turned off (OFF).

In contrast, if I is smaller than the current threshold, the current determining comparator 102 outputs the High signal and the FET switch 136 is turned on. In this case, the power supply switching threshold to be used is the safety priority threshold. Consequently, if V is equal to or greater than the safety priority threshold, the power supply switching comparator 103 outputs the High power supply switching signal. In this case, the FET switches 201 and 202 are turned on (ON). Furthermore, if V is less than the safety priority threshold, the power supply switching comparator 103 outputs a Low power supply switching signal. In this case, the FET switches 201 and 202 are turned off (OFF).

In the following, a description will be given of the circuit operation in accordance with the state of the AC adapter. Here, a description will be given of a case in which, between the power supply switching thresholds, the safety priority threshold is 17.6 (V) and the electrical power saving priority threshold is 16.6 (V).

First, a description will be given of a case in which the AC adapter 2, which is unauthorized adapter with a low output voltage, is connected to the AC adapter connector 11. In this case, the operation is the same as that performed in the first embodiment described with reference to FIG. 11. However, because the output of the current determining comparator 102 is High, the FET switch 136 is turned on and the power supply switching threshold becomes 17.6 (V) that is the safety priority threshold. Specifically, the reference for determining whether the unauthorized AC adapter 2 is connected becomes stricter than that used in the first embodiment. In this case, because the threshold is greater than that used in the first embodiment, similarly to the first embodiment, the AC adapter voltage is lower than the safety priority threshold. Consequently, the power supply switching comparator 103 remains to turn off the FET switches 201 and 202. Accordingly, the CPU 20 and the miscellaneous system 21 continue to receive the electrical power supply from the battery 13.

In the following, a description will be given of a case in which the AC adapter 2 is connected in the state in which the battery 13 is running. In this case, the operation is the same as that performed in the first embodiment described with reference to FIG. 12. However, also in this case, because the output of the current determining comparator 102 is High, the FET switch 136 is turned on and the power supply switching threshold becomes 17.6 (V) that is the safety priority threshold. Specifically, the reference for determining whether the unauthorized AC adapter is connected becomes stricter than that used in the first embodiment.

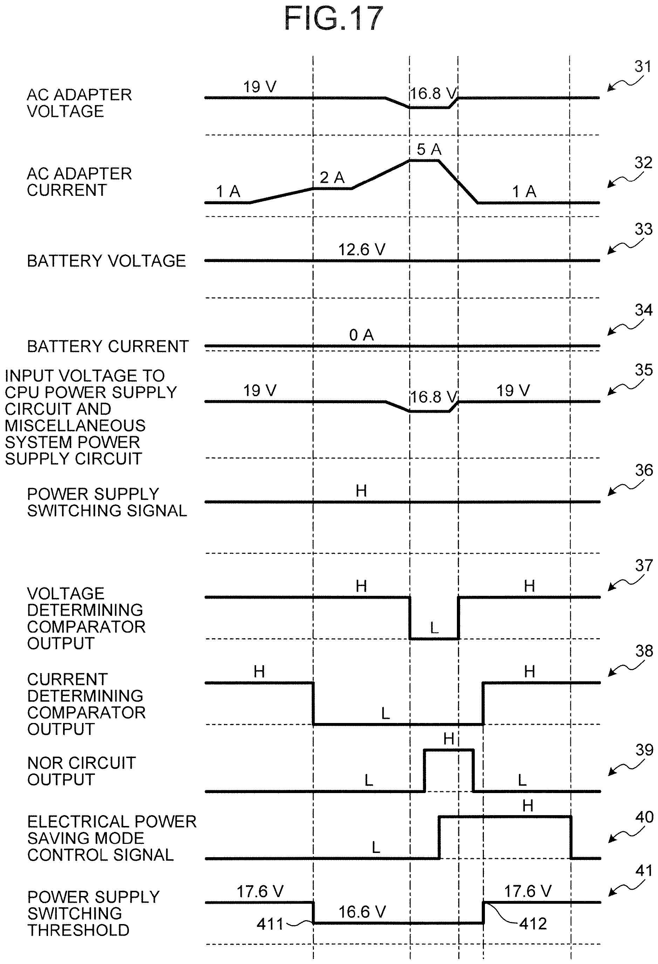

In the following, the operation of each of the circuits when the capacity of the AC adapter 2 exceeds after the mode is shifted to the turbo mode while the AC adapter 2 is being connected to the notebook PC 1 in the second embodiment will be described with reference to FIG. 17. FIG. 17 is a sequence diagram illustrating the circuit operation performed when, in the second embodiment, the capacity of the AC adapter exceeds after a mode is shifted to the turbo mode while the AC adapter is being connected. In the graphs 31 to 41 illustrated in FIG. 17, the vertical axis, the horizontal axis, and the reference value indicate the same as those used in FIG. 11.

In this case, the circuit operations indicated by the graphs 31 to 40 are the same as those illustrated in FIG. 13. Accordingly, a description will be given of a shift of the power supply switching threshold indicated by the graph 41.

Because the AC adapter 2 has already been connected, as indicated by the graph 31, the AC adapter voltage is 19 (V) at first. Furthermore, as indicated by the graph 32, the AC adapter current is 1 (A) at first. In this case, the AC adapter current does not exceed the current threshold and, as indicated by the graph 38, the output of the current determining comparator 102 is High. In this case, as indicated by the graph 41, the FET switch 136 is turned on and the power supply switching threshold is 17.6 (V) that is the safety priority threshold.

Then, the CPU 20 starts to perform a process having a high load. Because the load applied to the CPU 20 becomes high, the AC adapter current starts to increase. Then, as indicated by the graph 38, when the AC adapter current increases and exceeds the current threshold, the output of the current determining comparator 102 shifts from High to Low. In response to this state, as indicated by the graph 41, the power supply switching threshold is changed to 16.6(V), at a timing 411, that is the electrical power saving priority threshold.

Thereafter, the Low signal is input to the NOR circuit 141 from both the voltage determining comparator 101 and the current determining comparator 102. Thus, as indicated by the graph 39, the output of the NOR circuit 141 shifts from Low to High. Then, as indicated by the graph 40, the one-shot circuit 142 in the electrical power saving control circuit 104 outputs a High electrical power saving mode control signal for a certain time period after the High signal is received from the NOR circuit 141. In response to this state, the CPU 20 shifts to the electrical power saving mode.

Then, because the CPU 20 shifts to the electrical power saving mode, the impedance of the CPU 20 and the miscellaneous system 21 increase. Accordingly, as indicated by the graph 32, the AC adapter current drops. Thereafter, the AC adapter current remains at 1 A. Then, at a timing at which the AC adapter current falls below the current threshold, as indicated by the graph 38, the output of the current determining comparator 102 shifts from Low to High. In response to this state, as indicated by the graph 41, at a timing 412, the power supply switching threshold is reset to 17.6 (V) that is the safety priority threshold.

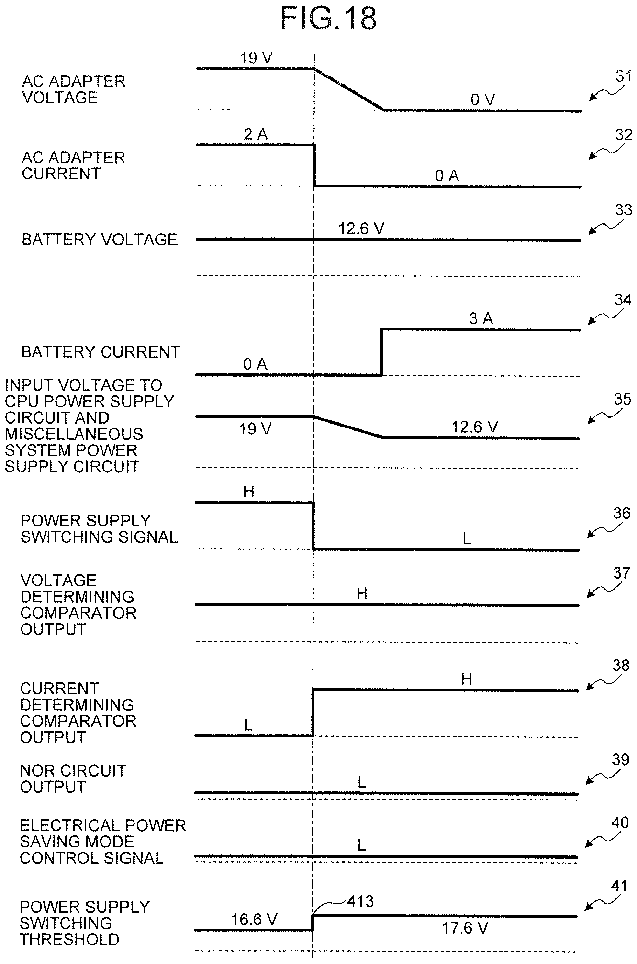

In the following, the operation of each of the circuits when the AC adapter 2 is disconnected from the notebook PC 1 in the second embodiment will be described with reference to FIG. 18. FIG. 18 is a sequence diagram illustrating the circuit operation performed when the AC adapter is disconnected in the second embodiment. In the graphs 31 to 41 illustrated in FIG. 18, the vertical axis, the horizontal axis, and the reference value indicate the same as those used in FIG. 11. In this case, a description will be given of a case in which the CPU 20 and the miscellaneous system 21 each performs a process that has a high load and the AC adapter current exceeds the current threshold.

As indicated by the graph 32, the AC adapter current is 2 (A) at first because a process that has a high processing load is being performed. In this case, as indicated by the graph 38, the AC adapter current exceeds the current threshold of 1.5 (A), the output of the current determining comparator 102 is Low. Consequently, the FET switch 136 is turned off and, as indicated by the graph 41, the power supply switching threshold is 16.6 (V) that is the electrical power saving priority threshold.

Then, the AC adapter current becomes 0 (A) at the timing at which the AC adapter 2 is disconnected. In this case, because the AC adapter current falls below the current threshold of 1.5 (A), as indicated by the graph 38, the output from the current determining comparator 102 shifts from Low to High. Consequently, the FET switch 136 is turned on and, as indicated by the graph 41, the power supply switching threshold is changed to 17.6 (V) that is the safety priority threshold at a timing 413.

As described above, the power supply monitoring circuit according to the second embodiment determines, by using electrical power saving priority threshold when the AC adapter current is equal to or greater than the current threshold, whether electrical power source needs to be shifted and determines, by using the safety priority threshold when the AC adapter current is less than the current threshold, whether the electrical power source needs to be shifted. For example, it is assumed that the current threshold is set to a current of a process with a predetermined amount of load is being performed. In such a case, the safety priority threshold is used when the CPU 20 and the miscellaneous system 21 perform or do not perform a process with the load equal to or less than the predetermined amount. Consequently, a connection of an unauthorized AC adapter can be more reliably detected. Thus, the reliability of the information processing apparatus can be maintained.

Furthermore, when the CPU 20 and the miscellaneous system 21 perform the process with the load equal to or greater than the predetermined amount, the information processing apparatus is shifted to the electrical power saving mode in order to avoid a risk while continuing an electrical power supply from the AC adapter by using the electrical power saving priority threshold. Consequently, the AC adapter can be used up to the limit of the capacity of the electrical power supply.

Accordingly, the power supply monitoring circuit according to the second embodiment can efficiently use an external power supply up to the limit of the capacity of the electrical power supply while surely maintaining the reliability.

### (Hardware configuration)

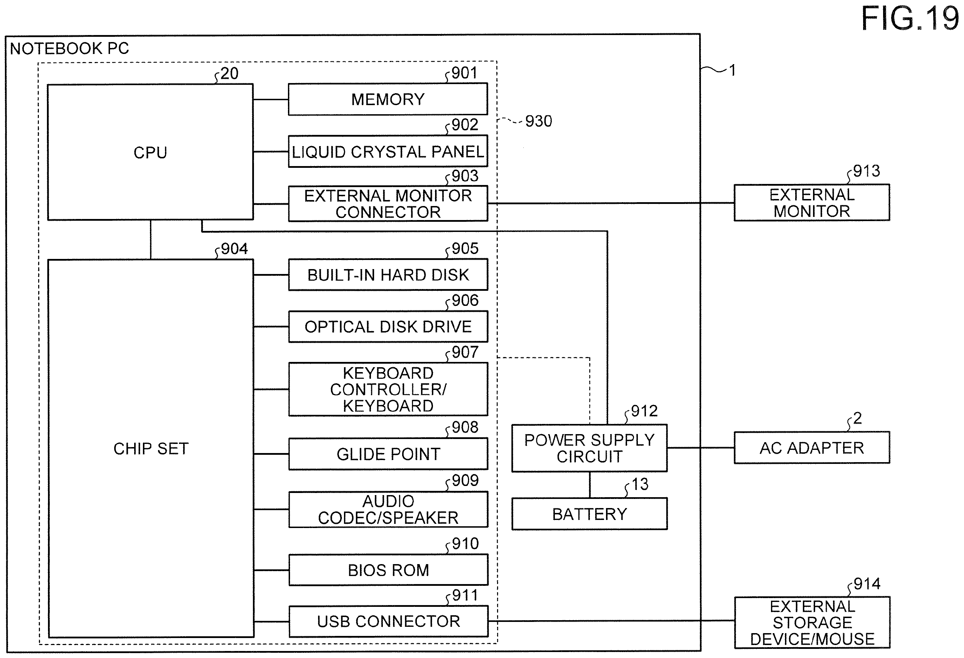

In the following, an example of the hardware configuration of the notebook PC 1 will be described with reference to FIG. 19. FIG. 19 is a block diagram illustrating an example of the hardware configuration of a notebook PC.

The notebook PC 1 includes a CPU 20, a memory 901, a liquid crystal panel 902, an external monitor connector 903, a chip set 904, a built-in hard disk 905, an optical disk drive 906, and a keyboard controller/keyboard 907. Furthermore, the notebook PC 1 includes a glide point 908, an audio codec/speaker 909, a basic input output system (BIOS) read only memory (ROM) 910, and a universal system bus (USB) connector 911. Furthermore, the notebook PC 1 includes a power supply circuit 912 and a battery 13.

The CPU 20 is connected to the memory 901, the liquid crystal panel 902, the external monitor connector 903, and the chip set 904 via a bus. An external monitor 913 may also be connected to the external monitor connector 903.

The built-in hard disk 905, the optical disk drive 906, the keyboard controller/keyboard 907, the glide point 908, the audio codec/speaker 909, the BIOS ROM 910, and the USB connector 911 are connected to the chip set 904. An external storage device/mouse 914 or the like may also be connected to the USB connector 911.

Each of the devices connected to the memory 901, the liquid crystal panel 902, and the chip set 904 is an example of the miscellaneous system 21 illustrated in FIG. 1.

The power supply circuit 912 includes each of the circuits other than the CPU 20, the miscellaneous system 21, and the battery 13 illustrated in FIG. 1. For example, the power supply circuit 912 includes the AC adapter identifying circuit 10, the AC adapter connector 11, the battery connector 12, the boot up power supply circuit 14, the CPU power supply circuit 15, and the miscellaneous system power supply circuit 16. Furthermore, the power supply circuit 912 includes the AC adapter line 17, the AC adapter current sensing resistor 18, the battery rectifier diode 19, the FET switches 201 and 202, and the like. The power supply circuit 912 supplies electrical power to each of the units enclosed by the broken line 930. Furthermore, the power supply circuit 912 sends an electrical power saving mode switching signal to the CPU 20.

According to an aspect of an embodiment of the information processing apparatus and the power supply monitoring circuit disclosed in the present invention, an advantage is provided in that the capacity of an electrical power supply of external connection power supply can be sufficiently used while reliability is maintained.

## Claims

1. An information processing apparatus comprising:
an external power supply (2);
a secondary battery (13);
a power supply monitoring circuit (10); and
an information processing unit (20, 21), wherein
the information processing unit (20, 21) is operated by electrical power supplied from the external power supply (2) or the secondary battery (13), and
the power supply monitoring circuit (10) includes
a first determining unit (101) that is configured to determine whether a voltage supplied from the external power supply (2) is equal to or greater than a voltage threshold,
a second determining unit (102) that is configured to determine whether a current supplied from the external power supply (2) is equal to or greater than a current threshold,
an electrical power saving control circuit (104) that is configured to drop, when the first determining unit (101) determines that the supplied voltage is lower than the voltage threshold and the second determining unit (102) determines that the supplied current is equal to or greater than the current threshold, electrical power consumed by the information processing unit (20, 21), and
an electrical power source switching circuit (103) that is configured to select one of the external power supply (2) and the secondary battery (13) as an electrical power source to the information processing unit (20, 21), based on the supplied voltage, and
the electrical power source switching circuit (103) is configured to determine whether the supplied voltage is equal to or greater than a predetermined threshold that is smaller than the voltage threshold, to interrupt, when the supplied voltage is lower than the predetermined threshold, the electrical power supplied from the external power supply (2) to the information processing unit (20, 21), and to supply electrical power from the secondary battery (13) to the information processing unit (20, 21).

2. The information processing apparatus according to claim 1, wherein, when the supplied voltage is not input, the first determining unit (101) is set to a condition that is the same as the condition when the supplied voltage is equal to or greater than the voltage threshold.

3. The information processing apparatus according to claim 1 or 2, wherein, when the first determining unit (101) determines that the supplied voltage is equal to or greater than the voltage threshold during the time for which electrical power consumed by the information processing unit (20, 21) is made to drop, the electrical power saving control circuit (104) is configured to release the drop in the electrical power consumed by the information processing unit (20, 21).

4. The information processing apparatus according to any of claims 1 to 3, wherein the external power supply (2) includes a protection circuit (21) that is configured to drop, when the external power supply (2) supplies electrical power to the information processing unit (20, 21) and when the impedance of the information processing unit (20, 21) is equal to or less than a predetermined value, the supplied voltage and that releases, when the impedance of the information processing unit (20, 21) becomes greater than the predetermined value, the drop in the supplied voltage.

## Patentansprüche

1. Eine Informationsverarbeitungsvorrichtung, umfassend:
eine externe Stromversorgung (2);
eine Sekundärbatterie (13);
eine Stromversorgungsüberwachungsschaltung (10); und
eine Informationsverarbeitungseinheit (20, 21), wobei
die Informationsverarbeitungseinheit (20, 21) durch von der externen Stromversorgung (2) oder der Sekundärbatterie (13) gelieferten elektrische Energie betrieben wird, und
die Stromversorgungsüberwachungsschaltung (10) beinhaltet
eine erste Bestimmungseinheit (101), die konfiguriert ist, zu bestimmen, ob eine von der externen Stromversorgung (2) zugeführte Spannung gleich oder größer als ein Spannungsschwellenwert ist,
eine zweite Bestimmungseinheit (102), die konfiguriert ist, zu bestimmen, ob ein von der externen Stromversorgung (2) zugeführter Strom gleich oder größer als ein Stromschwellenwert ist,
eine elektrische Energiesparsteuerschaltung (104), die konfiguriert ist, wenn die erste Bestimmungseinheit (101) bestimmt, dass die zugeführte Spannung niedriger als der Spannungsschwellenwert ist, und die zweite Bestimmungseinheit (102) bestimmt, dass der zugeführte Strom gleich oder größer als der Stromschwellenwert ist, die von der Informationsverarbeitungseinheit (20, 21) verbrauchte elektrische Leistung zu verringern, und
einen elektrischer Stromquellen-Schaltkreis (103), der konfiguriert ist, eine von der externen Stromversorgungen (2) und der Sekundärbatterie (13) als elektrische Stromquelle für die Informationsverarbeitungseinheit (20, 21) basierend auf der gelieferten Spannung auszuwählen, und
der elektrische Stromquellen-Schaltkreis (103) ist konfiguriert, zu bestimmen, ob die zugeführte Spannung gleich oder größer als ein vorgegebener Schwellenwert ist, um, wenn die zugeführte Spannung niedriger als der vorgegebene Schwellenwert ist, die von der externen Stromversorgung (2) an die Informationsverarbeitungseinheit (20, 21) zugeführte elektrische Leistung zu unterbrechen, und die elektrische Leistung von der Sekundärbatterie (13) an die Informationsverarbeitungseinheit (20, 21) zu liefern.

2. Die Informationsverarbeitungsvorrichtung gemäß Anspruch 1, worin, wenn die zugeführte Spannung nicht eingegeben wird, die erste Bestimmungseinheit (101) auf einen Zustand eingestellt wird, der derselbe ist wie der Zustand, wenn die zugeführte Spannung gleich oder größer als der Spannungsschwellenwert ist.

3. Die Informationsverarbeitungsvorrichtung gemäß Anspruch 1 oder 2, wobei, wenn die erste Bestimmungseinheit (101) bestimmt, dass die zugeführte Spannung gleich oder größer als der Spannungsschwellenwert während der Zeit ist, in der die von der Informationsverarbeitungseinheit (20, 21) verbrauchte elektrische Energie zum verringert wird, die elektrische Energiesparschaltung (104) konfiguriert ist, das Verringern der von der Informationsverarbeitungseinheit (20, 21) verbrauchten elektrischen Energie aufzuheben.

4. Die Informationsverarbeitungsvorrichtung gemäß einem der Ansprüche 1 bis 3, wobei die externe Stromversorgung (2) eine Schutzschaltung (21) beinhaltet, die konfiguriert ist, wenn die externe Stromversorgung (2) der Informationsverarbeitungseinheit (20, 21) elektrische Energie zuführt und wenn die Impedanz der Informationsverarbeitungseinheit (20, 21) gleich oder kleiner als ein vorbestimmter Wert ist, die zugeführte Spannung zu verringern und die, wenn die Impedanz der Informationsverarbeitungseinheit (20, 21) größer als der vorbestimmte Wert wird, das Verringern der zugeführten Spannung aufhebt.

## Revendications

1. Appareil de traitement d'informations comprenant :
une alimentation électrique externe (2) ;
une batterie secondaire (13) ;
un circuit de surveillance d'alimentation électrique (10) ; et
une unité de traitement d'informations (20, 21), dans lequel
l'unité de traitement d'informations (20, 21) fonctionne à l'aide d'une énergie électrique fournie par l'alimentation électrique externe (2) ou la batterie secondaire (13), et
le circuit de surveillance d'alimentation électrique (10) comprend
une première unité de détermination (101) qui est configurée pour déterminer si une tension fournie par l'alimentation électrique externe (2) est égale ou supérieure à un seuil de tension,
une seconde unité de détermination (102) qui est configurée pour déterminer si un courant fourni par l'alimentation électrique externe (2) est égal ou supérieur à un seuil de courant,
un circuit de commande à économie d'énergie (104) qui est configuré pour réduire, lorsque la première unité de détermination (101) détermine que la tension fournie est inférieure au seuil de tension et la seconde unité de détermination (102) détermine que le courant fourni est égal ou supérieur au seuil de courant, l'énergie électrique consommée par l'unité de traitement d'informations (20, 21), et
un circuit de commutation de source d'énergie électrique (103) qui est configuré pour sélectionner l'une de l'alimentation électrique externe (2) et de la batterie externe (13) comme source d'énergie électrique de l'unité de traitement d'informations (20, 21), sur la base de la tension fournie, et
le circuit de commutation de source d'énergie électrique (103) est configuré pour déterminer si la tension fournie est égale ou supérieure à un seuil prédéterminé qui est inférieur au seuil de tension, afin de couper, lorsque la tension fournie est inférieure au seuil prédéterminé, l'énergie électrique fournie par l'alimentation électrique externe (2) à l'unité de traitement d'informations (20, 21), et pour fournir l'énergie électrique qui provient de la batterie secondaire (13) à l'unité de traitement d'informations (20, 21).

2. Appareil de traitement d'informations selon la revendication 1, dans lequel, lorsque la tension fournie n'est pas admise, la première unité de détermination (101) est placée dans une condition qui est identique à la condition qui existe lorsque la tension fournie est égale ou supérieure au seuil de tension.

3. Appareil de traitement d'informations selon la revendication 1 ou 2, dans lequel, lorsque la première unité de détermination (101) détermine que la tension fournie est égale ou supérieure au seuil de tension pendant la durée pendant laquelle l'énergie électrique consommée par l'unité de traitement d'informations (20, 21) diminue, le circuit de commande à économie d'énergie (104) est configuré pour déclencher la baisse d'énergie électrique consommée par l'unité de traitement d'informations (20, 21).

4. Appareil de traitement d'informations selon l'une quelconque des revendications 1 à 3, dans lequel l'alimentation électrique externe (2) comprend un circuit de protection (21) qui est configuré pour réduire, lorsque l'alimentation électrique externe (2) fournit une énergie électrique à l'unité de traitement d'informations (20, 21) et lorsque l'impédance de l'unité de traitement d'informations (20, 21) est égale ou inférieure à une valeur prédéterminée, la tension fournie, et qui déclenche, lorsque l'impédance de l'unité de traitement d'informations (20, 21) devient supérieure à la valeur prédéterminée, la baisse de tension fournie.
